# EUROPÄISCHE PATENTSCHRIFT

(11) **EP 1 403 116 B1**
(45) Veröffentlichungstag und Bekanntmachung des Hinweises auf die Patenterteilung: **07.01.2015**
(21) Anmeldenummer: 03020839.1
(22) Anmeldetag: 13.09.2003
(51) Int. Cl.: B60J 7/20

(54) **Cabriolet-Fahrzeug mit versenkbarem Faltverdeck**
Convertible vehicle with a retractable, foldable soft top
Véhicule convertible avec toit pliant rétractable

(30) Priorität: 28.09.2002 DE 10245361
(43) Veröffentlichungstag der Anmeldung: 31.03.2004
(73) Patentinhaber: Valmet Automotive Oy, 23500 Uusikaupunki (FI)
(72) Erfinder: Habacker, Norbert, 49565 Bramsche (DE)
(74) Vertreter: Kronthaler, Schmidt & Coll.

(56) Entgegenhaltungen:
- DE-A1- 19 912 893
- DE-C1- 3 801 148
- DE-U- 29 812 165
- DE-U- 29 921 497
- US-A- 5 967 593

## Beschreibung

Die Erfindung bezieht sich auf ein Cabriolet-Fahrzeug gemäß dem Oberbegriff des Anspruchs 1, dessen Faltverdeck in einem Verdeckkasten ablegbar und dieser mittels eines Verdeckkastendeckels verschließbar ist.

Bei einem bekannten Cabriolet-Fahrzeug dieser Art (DE 38 01 148 C1) wird das versenkbare Faltverdeck mittels längsrandseitig angreifender Verdeckgestängeteile bewegt, wobei diese beim Öffnen bzw. Schließen des Faltverdecks ein jeweils im oberen Seitenrandbereich der Fahrzeugkarosserie vorgesehene Aussparung durchgreifen, die mittels einer am Verdeckkastendeckel vorgesehenen Abdeckplatte verschließbar ist. Die Abdeckplatte ist an der Unterseite des Verdeckkastendeckels schwenkbar abgestützt und kann mittels eines Antriebsorgans in die die Aussparung abdeckende Schließstellung verschwenkt werden.

Aus der DE 199 12 893 A1 ist ein Verdeckkastendeckel eines Cabrio-Fahrzeugs gezeigt, welcher zur Aufnahme eines Verdecks zwischen einer einen Verdeckraum abschließenden und einer den Verdeckraum freigebenden Position verlagerbar ist. In einem heckseitigen Bereich des Verdeckkastendeckels weist dieser einen Hebel mit einer Rolle auf, wobei die Rolle bei einem Schließvorgang des Verdeckkastendeckels in Eingriff mit einer Kulisse kommt, welche mit einer Karosserie des Fahrzeugs verbunden ist.

Die Erfindung befaßt sich mit dem Problem, ein Cabriolet-Fahrzeug im Bereich der am Verdeckkastendeckel vorgesehenen Abdeckplatte so auszubilden, daß diese mit geringem technischen Aufwand auf einer fahrzeugspezifischen Führungsbahn verlagerbar ist, dabei ungewollte Berührungen der Abdeckplatte mit Karosseriebauteilen im Bereich der Aussparung vermeidbar sind und bei optischer Integration der Abdeckplatte in die Karosseriekontur eine schwingstabile Verriegelung in der Anlageposition erreicht ist.

Die Erfindung löst diese Aufgabe durch ein Cabriolet-Fahrzeug mit den Merkmalen des Anspruchs 1. Hinsichtlich wesentlicher weiterer Ausgestaltungen wird auf die Ansprüche 2 bis 9 verwiesen.

Das erfindungsgemäß ausgebildete Cabriolet-Fahrzeug ist im Bereich des Verdeckkastendeckels mit einer Abdeckplatte versehen, die eine mit einem karosserieseitigen Führungsglied zusammenwirkende Fangvorrichtung als funktionale Verbindungseinheit aufweist. Durch diese Einheit ist ein bereits bei der Bewegung des Verdeckkastendeckels wirksamer und eine lagegenaue Steuerung der Abdeckplatte bewirkender Verbindungseingriff erreicht. Durch eine mit der Schwenkbewegung des Verdeckkastendeckels überlagerte Schubbewegung ist eine geführte Verlagerung der Abdeckplatte entsprechend der Karosseriekontur so möglich, daß bei der Überführung der im Bereich der Aussparung vorgesehenen Abdeckplatte in die Schließstellung diese auf einer Berührungen mit Karosseriebauteilen ausschließenden Bewegungsbahn verlagert wird und danach eine optimale Schließlage im Bereich der Aussparung erreicht ist.

In der Endphase dieser gemeinsamen Schließbewegung von Verdeckkastendeckel und Abdeckplatte wird diese mittels der Fangvorrichtung bis in eine karosserieseitig fixierte Verriegelungsstellung geführt, so daß die obenliegende Abdeckklappe eine entsprechend der Brüstungslinie des Fahrzeugs optimale Schließstellung einnimmt und ein optisch ansprechender Gesamteindruck im Heckbereich des Fahrzeugs erreicht ist.

Hinsichtlich weiterer Vorteile und Einzelheiten wird auf die nachfolgende Beschreibung und die Zeichnung verwiesen, in der ein Ausführungsbeispiel des Gegenstands der Erfindung veranschaulicht ist. In der Zeichnung zeigen:
- Fig. 1: eine perspektivische Ausschnittsdarstellung des Heckbereichs eines Cabriolet-Fahrzeugs, bei dem im oberen Seitenbereich der Fahrzeugkarosserie eine Aussparung vorgesehen ist, die mittels einer Abdeckplatte verschlossen ist, und
- Fig. 2 bis 5: jeweilige vergrößerte Ausschnittsdarstellungen (gemäß einer Linie III-III in Fig. 1) der am vorderen Randbereich des geschlossenen Verdeckkastendeckels vorgesehenen Abdeckplatte, an der unterseitig eine in unterschiedlichen Bewegungs- bzw. Schließphasen befindliche Fangvorrichtung vorgesehen ist.

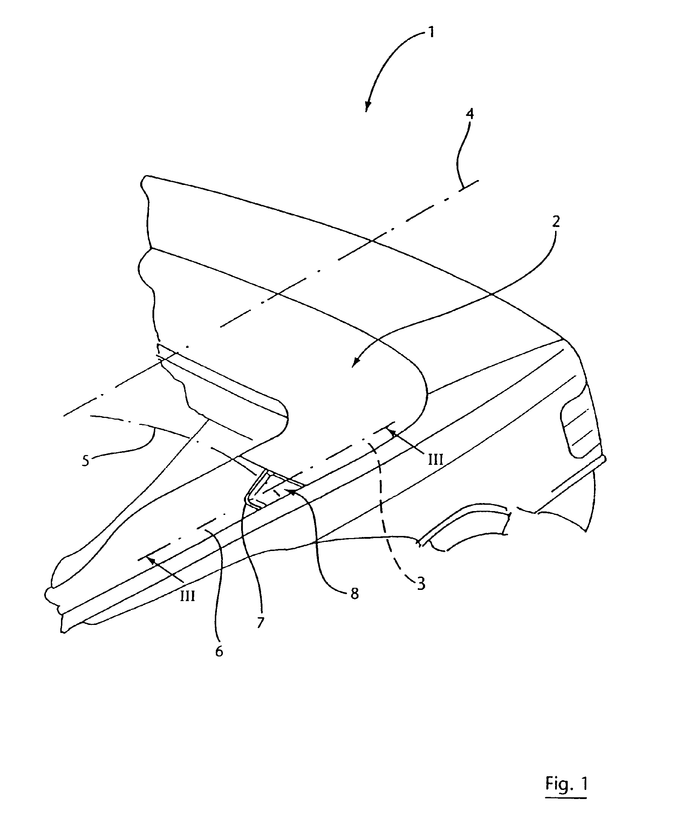

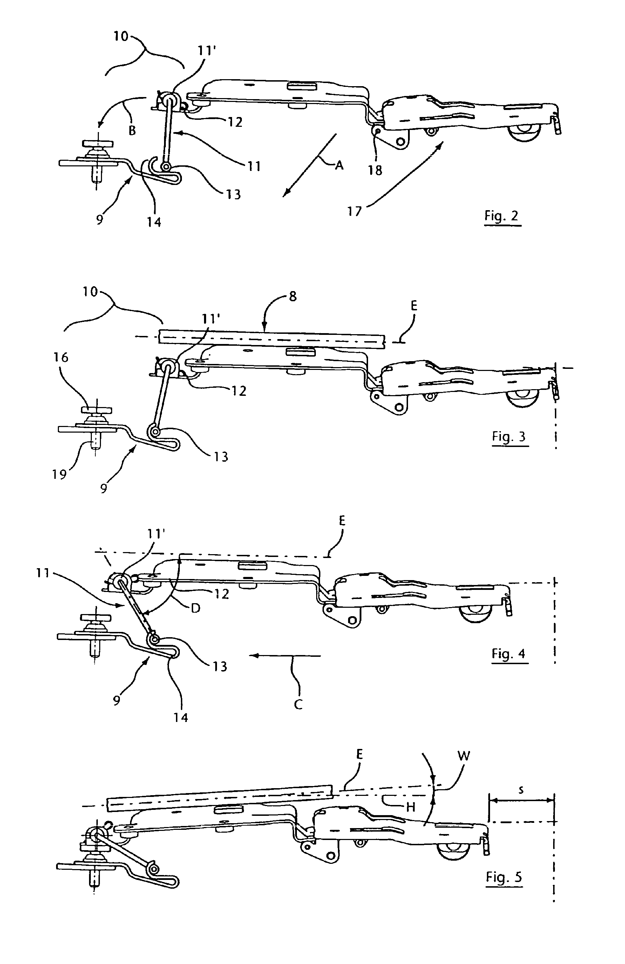

In Fig. 1 ist in einer perspektivischen Ausschnittsdarstellung ein insgesamt mit 1 bezeichnetes Cabriolet-Fahrzeug im Heckbereich veranschaulicht, dessen in der dargestellten Öffnungsstellung nicht sichtbares Verdeck in einen unterhalb eines Verdeckkastendeckels 2 befindlichen Innenraum eines nicht näher dargestellten Verdeckkastens 3 abgesenkt ist. Das insbesondere als ein Faltverdeck ausgebildete Verdeck wird während einem Öffnungs- bzw. Schließvorgang über jeweils randseitig und parallel zur Fahrzeuglängsmittelebene 4 angeordnete und karosserieseitig gelagerte Verdeckgestängeteile bewegt. Bei diesem Vorgang werden die Bauteile des Verdeckgestänges auf einer als einer Strich-Punkt-Linie 5 dargestellten Kurve verlagert und durchgreifen jeweils eine im oberen Seitenrandbereich 6 der Fahrzeugkarosserie vorgesehene Aussparung 7, die in der dargestellten Öffnungsstellung des Faltverdecks mit einer Abdeckplatte 8 verschlossen ist (Fig. 3).

Die Abdeckplatte 8 ist gemäß einer aus DE 296 02 762.6 bekannten Lösung als ein unterhalb des Seitenrandbereiches 6 verlagerbares Schiebeteil ausgebildet und bei der Lösung gemäß DE 38 01 148 C1 ist die Abdeckplatte 8 am vorderen Ende des Verdeckkastendeckels 2 gehalten und kann mittels eines ein Spannseil aufweisenden Antriebsorgans verlagert werden.

Die erfindungsgemäße Abdeckplatte 8 ist ebenfalls am Verdeckkastendeckel 2 gehalten und wirkt mit einer beim Schließvorgang (Bewegungsfolge gemäß Fig. 2 bis 5) mit einem karosserieseitigen Führungsglied 9 verbindbaren Fangvorrichtung 10 zusammen. Die Abdeckplatte 8 ist mittels dieser Fangvorrichtung 10 in eine Halteposition im Bereich der Aussparung 7 überführbar und von dieser beim Öffnungsvorgang (umgekehrte Reihenfolge des Bewegungsablaufs gemäß Fig. 5 bis Fig. 2) wegführbar. Es versteht sich, daß bei dieser gesteuerten Teil-Bewegung auch der Verdeckkastendeckel 2 mitbewegt werden kann.

Für diese Positionierung der Abdeckplatte 8 in ihrer Zwischenstellung (Fig. 2) kann auch ein von der Bewegung des Verdeckkastendeckels (Pfeil A) unabhängiger Antrieb (nicht dargestellt) vorgesehen sein.

Die Darstellung gemäß Fig. 2 zeigt, daß die gemeinsam mit dem nicht näher dargestellten Verdeckkastendeckel 2 aus dessen hockgeklappter Öffnungsstellung (nicht dargestellt) rückführbare Abdeckplatte 8 in einer ersten Bewegungsphase beim Schließvorgang bis in die nahezu waagerechte Zwischenstellung verschwenkt ist (Pfeil A) und dabei die Fangvorrichtung 10 an dem Führungsglied 9 in Anlagestellung gelangt. Danach kann die Baugruppe aus Verdeckkastendeckel 2 und Abdeckplatte 8 auf einer im wesentlichen horizontalen Bewegungsbahn (Pfeil C, Fig. 4) weiterbewegt werden, wobei eine rückseitig am Verdeckkastendeckel 2 angreifende Scharniervorrichtung (nicht sichtbar) als Führungs- und Stützbaugruppe wirksam ist. Während dieser dem Übergang von Fig. 4 zu 5 entsprechenden Bewegungsphase wird die Verbindung im Bereich von Führungsglied 9 und Fangvorrichtung 10 als Steuerung wirksam, derart, daß zusätzlich zur Bewegungseinleitung mittels des Verdeckkastendeckels die Abdeckplatte 8 gehalten und geführt wird. Unter Wirkung des Deckel-Vorschubes C wird gleichzeitig die mit einem Pfeil B (Fig. 2) angedeutete Bewegungsbahn durchlaufen, so daß die Abdeckplatte 8 im Bereich des oberen Seitenrandes 6 der Karosserie unter die Aussparung 7 gelangt. Durch die konstruktive Gestaltung der Baugruppen 9 und 10 ist die Bewegungsbahn B so anpaßbar, daß während des Öffungs- bzw. Schließvorgangs Berührungen der relativ zueinander verlagerbaren Bauteile vermieden sind.

Die Fangvorrichtung 10 ist mit einem diese mit dem karosserieseitigen Führungsglied 9 verbindenden Fangorgan in Form eines Fangarmes 11 versehen. In Fig. 2 ist dessen Anlageposition beim Schließvorgang am Führungsglied 9 dargestellt, wobei durch das Weiterbewegen (Pfeil C) des Verdeckkastendeckels 2 der Fangarm 11 relativ zur Einbauebene E der Abdeckplatte 8 um ein Stützgelenk 11' verschwenkbar ist (Pfeil D) und der Fangarm 11 bei Erreichen einer Endstellung (Fig. 5) in einer Halteposition am Führungsglied 9 verriegelt wird. Ausgehend von Fig. 2 (Anlagestellung der Teile 9 und 10) ist die Abdeckplatte 8 bei Erreichen der Endstellung in Fig. 5 um einen Schubweg S im wesentlichen horizontal verlagert.

Der Fangarm 11 ist an der Fangvorrichtung 10 schwenkbeweglich an der Vorderseite der Abdeckplatte 8 abgestützt und mittels einer Rückstellfeder 12 o. dgl. Element in die Ausgangsstellung gemäß Fig. 2 verlagerbar. Zur Auflage auf dem karosserieseitigen Führungsglied 9 ist der Fangarm 11 mit einer Tastrolle 13 versehen. Für die lösbare Aufnahme des Fangarmes 11 mit der Tastrolle 13 weist das Führungsglied 9 eine nach Art einer Halteklaue wirksame Haltekontur 14 auf, mit der eine formschlüssige und bei der Rückbwegung (entgegen Pfeilrichtung C) lösbare Verbindung der aneinanderliegenden Teile erreicht ist.

Die Darstellung gemäß Fig. 5 zeigt das Erreichen der Halteposition für die Abdeckplatte 8, wobei die mittels des Führungsgliedes 9 in die vorgesehene Position verlagerte Fangvorrichtung 10 durch eine Tragplatte 15 auf einem Anlagesockel 16 karosseriefest abgestützt ist. Der Anlagesockel 16 ist dabei als oberer Endbereich eines das Führungsglied 9 mit der Karosserie verbindenden Haltebolzens 19 vorgesehen.

Die Fangvorrichtung 10 bzw. die Abdeckplatte 8 ist an ihrem dieser Stützverbindung abgewandten Ende durch eine gelenkige Baugruppe 17 mit dem Verdeckkastendeckel 2 so verbunden, daß die Abdeckplatte 8 im Bereich eines Gelenkes 18 in einer von der Horizontalebene H abweichenden Einbaulage (Winkel W) schwenkbar ist und damit durch einfache bauliche Maßnahmen eine optimale Anpassung an die Kontur der Aussparung 7 bzw. die Kontur des Fahrzeugs im Bereich des oberen Seitenrandes 6 erreicht ist.

## Patentansprüche

1. Cabriolet-Fahrzeug mit versenkbarem Faltverdeck, dessen längsrandseitige Verdeckgestängeteile beim Öffnen bzw. Schließen des Faltverdecks eine jeweils im oberen Seitenrandbereich (6) der Fahrzeugkarosserie vorgesehene Aussparung (7) durchgreifen, die bei geöffnetem Faltverdeck mittels einer am Verdeckkastendeckel (2) gehaltenen und durch einen Seilzug o. dgl. Antriebsorgan schwenkbaren Abdeckplatte (8) verschließbar ist, **dadurch gekennzeichnet, daß** die Abdeckplatte (8) eine beim Schließvorgang mit einem karosserieseitigen Führungsglied (9) verbindbare Fangvorrichtung (10) aufweist, wobei die Fangvorrichtung (10) mit einem diese mit dem karosserieseitigen Führungsglied (9) verbindenden Fangarm (11) versehen ist, und wobei der Fangarm (11) der Fangvorrichtung (10) beim Schließvorgang an dem an der Fahrzeugkarosserie vorgesehenen Führungsglied (9) anlegbar, durch das Weiterbewegen des Verdeckkastendeckels (2) der Fangarm (11) relativ zur Einbauebene (E) der Abdeckplatte (8) verschwenkbar und der Fangarm (11) bei Erreichen einer Halteposition am Führungsglied (9) verriegelbar ist.

2. Cabriolet-Fahrzeug nach Anspruch 1, **dadurch gekennzeichnet, daß** die Abdeckplatte (8) mittels der Fangvorrichtung (10) in eine Halteposition im Bereich der Aussparung (7) überführbar und von dieser beim Öffnungsvorgang wegführbar ist.

3. Cabriolet-Fahrzeug nach Anspruch 1 oder 2, **dadurch gekennzeichnet, daß** die gemeinsam mit dem Verdeckkastendeckel (2) verlagerbare Abdeckplatte (8) in einer ersten Bewegungsphase in eine Zwischenstellung schwenkbar und danach mittels der am Führungsglied (9) anliegenden Fangvorrichtung (10) auf einer im wesentlichen horizontalen Bewegungsbahn (B) verlagerbar ist.

4. Cabriolet-Fahrzeug nach einem der Ansprüche 1 bis 3, **dadurch gekennzeichnet, daß** die Abdeckplatte (8) mittels ihres Antriebsorgans in eine von der Bewegung des Verdeckkastendeckels (2) unabhängige Zwischenstellung verlagerbar ist.

5. Cabriolet-Fahrzeug nach einem der Ansprüche 1 bis 4, **dadurch gekennzeichnet, daß** der Fangarm (11) der Fangvorrichtung (10) schwenkbeweglich an der Vorderseite der Abdeckplatte (8) abgestützt und mittels eines Rückstellelementes (12) verlagerbar ist.

6. Cabriolet-Fahrzeug nach einem der Ansprüche 1 bis 5, **dadurch gekennzeichnet, daß** der Fangarm (11) eine auf dem karosserieseitigen Führungsglied (9) auflegbare Tastrolle (12) aufweist.

7. Cabriolet-Fahrzeug nach Anspruch 6, **dadurch gekennzeichnet, daß** das Führungsglied (9) mit einer die Tastrolle (12) des Fangarmes (11) erfassenden Haltekontur (14) ausgebildet ist.

8. Cabriolet-Fahrzeug nach einem der Ansprüche 1 bis 7, **dadurch gekennzeichnet, daß** das Führungsglied (9) an einem karosserieseitigen Haltebolzen (19) festgelegt ist, dessen freier Endbereich einen oberen Anlagesockel (16) bildet, auf dem eine an der Fangvorrichtung (10) vorgesehene Tragplatte (15) abstützbar ist.

9. Cabriolet-Fahrzeug nach einem der Ansprüche 1 bis 8, **dadurch gekennzeichnet, daß** die Fangvorrichtung (10) an ihrem zum Stützgelenk (11') des Fangarmes (11) abgewandten Ende durch ein Gelenk (18) mit einem am Verdeckkastendeckel gehaltenen Stützteil (17) schwenkbar verbunden ist.

## Claims

1. A convertible vehicle with a retractable folding hood whose hood linkage members arranged at the longitudinal edge of the hood pass through a recess (7), respectively provided in the upper lateral edge region (6) of the vehicle body, when opening or closing the folding hood, which recess (7), when the folding hood is opened, can be closed by a cover plate (8) which is retained on the hood compartment cover (2) and is pivotable by a Bowden cable or a similar drive element, **characterised in that** the cover plate (8) comprises a catch device (10) which can be connected with a guide member (9) on the vehicle body during the closing operation, wherein the catch device (10) is provided with a catch arm (11) which connects the catch device (10) with the guide member (9) on the vehicle body, and wherein the catch arm (11) of the catch device (10) can be placed in contact, during the closing operation, with the guide member (9) provided on the vehicle body, the catch arm (11) being pivotable with respect to the mounting plane (E) of the cover plate (8) by further movement of the hood compartment cover (2), and the catch arm (11) is lockable on the guide member (9) upon reaching a retaining position.

2. The convertible vehicle according to claim 1, **characterised in that** the cover plate (8) can be moved into a retaining position in the region of the recess (7) by means of the catch device (10) and can be moved away from said position during the opening operation.

3. The convertible vehicle according to claim 1 or 2, **characterised in that** the cover plate (8), which can be displaced together with the hood compartment cover (2), can be pivoted into an intermediate position during a first movement phase and is then displaceable on a substantially horizontal path of movement (B) by means of the catch device (10) contacting the guide member (9).

4. The convertible vehicle according to any one of claims 1 to 3, **characterised in that** the cover plate (8) is displaceable by means of its drive element into an intermediate position which is independent of the movement of the hood compartment cover (2).

5. The convertible vehicle according to any one of claims 1 to 4, **characterised in that** the catch arm (11) of the catch device (10) is pivotally supported on the front surface of the cover plate (8) and is displaceable by means of a return element (12).

6. The convertible vehicle according to any one of claims 1 to 5, **characterised in that** the catch arm (11) comprises a contact roller (12) which can be supported on the guide member (9) on the vehicle body.

7. The convertible vehicle according to claim 6, **characterised in that** the guide member (9) is provided with a retaining contour (14) seizing the contact roller (12) of the catch arm (11).

8. The convertible vehicle according to any one of claims 1 to 7, **characterised in that** the guide member (9) is fixed to a retaining bolt (19) on the vehicle body whose free end region forms an upper contact pedestal (16) on which a supporting plate (15) provided on the catch device (10) can be supported.

9. The convertible vehicle according to any one of claims 1 to 8, **characterised in that** the catch device (10) is pivotally connected, by a joint (18) at its end turned away from the supporting joint (11') of the catch arm (11), with a supporting member (17) retained on the hood compartment cover.

## Revendications

1. Véhicule cabriolet, comportant une capote pliante et escamotable, dont les pièces de tringlerie disposées au bord longitudinal de la capote traversent, lors de l'ouverture ou de la fermeture de la capote pliante, un évidement (7) respectif réalisé dans la région de bord latéral supérieure (6) de la carrosserie, ledit évidement (7) pouvant être fermé par une plaque de couverture (8) lorsque la capote pliante est ouverte, ladite plaque de couverture (8) étant retenue sur le couvercle du compartiment de capote (2) et pouvant être pivotée par un câble ou un élément d'entraînement similaire, **caractérisé en ce que** la plaque de couverture (8) comporte un dispositif de retenue (10) que l'on peut relier pendant l'opération de fermeture à un élément de guidage (9) du côté de la carrosserie, ledit dispositif de retenue (10) présentant un bras de retenue (11) reliant le dispositif de retenue (10) à l'élément de guidage (9) du côté de la carrosserie, et le bras de retenue (11) du dispositif de retenue (10) pouvant être mis en contact, pendant l'opération de fermeture, avec l'élément de guidage (9) disposé sur la carrosserie, le bras de retenue (11) pouvant pivoter par rapport au plan de montage (E) de la plaque de couverture (8) par continuation du déplacement du couvercle du compartiment de capote (2), et le bras de retenue (11) pouvant être arrêté sur l'élément de guidage (9) des qu'il atteigne une position de retenue.

2. Véhicule cabriolet selon la revendication 1, **caractérisé en ce que** la plaque de couverture (8) est déplaçable vers une position de retenue dans la région de l'évidement (7) au moyen du dispositif de retenue (10) et peut être emmenée de cette position pendant l'opération d'ouverture.

3. Véhicule cabriolet selon la revendication 1 ou 2, **caractérisé en ce que** la plaque de couverture (8), qui est déplaçable ensemble avec le couvercle du compartiment de capote (2), peut être pivotée vers une position intermédiaire pendant une première phase de déplacement et est ensuite déplaçable sur un trajet de déplacement (B) sensiblement horizontal au moyen du dispositif de retenue (10) en contact avec l'élément de guidage (9).

4. Véhicule cabriolet selon l'une quelconque des revendications 1 à 3, **caractérisé en ce que** la plaque de couverture (8) est déplaçable, au moyen de son élément d'entraînement, vers une position intermédiaire qui est indépendante du déplacement du couvercle du compartiment de capote (2).

5. Véhicule cabriolet selon l'une quelconque des revendications 1 à 4, **caractérisé en ce que** le bras de retenue (11) du dispositif de retenue (10) s'appuie à pivotement sur la face avant de la plaque de couverture (8) et est déplaçable au moyen d'un élément de rappel (12).

6. Véhicule cabriolet selon l'une quelconque des revendications 1 à 5, **caractérisé en ce que** le bras de retenue (11) comporte un galet de contact (12) qui peut prendre appui sur l'élément de guidage (9) du côté de la carrosserie.

7. Véhicule cabriolet selon la revendication 6, **caractérisé en ce que** l'élément de guidage (9) présente un contour de retenu (14) saisissant le galet de contact (12) du bras de retenue (11).

8. Véhicule cabriolet selon l'une quelconque des revendications 1 à 7, **caractérisé en ce que** l'élément de guidage (9) est fixé à une tige de retenue (19) du côté de la carrosserie, dont la région d'extrémité libre constitue une embase de contact supérieure (16) sur laquelle une plaque de support (15) disposée sur le dispositif de retenue (10) peut prendre appui.

9. Véhicule cabriolet selon l'une quelconque des revendications 1 à 8, **caractérisé en ce que** le dispositif de retenue (10) est relié à pivotement, par son extrémité détournée de l'articulation d'appui (11') du bras de retenue (11), à un élément d'appui (17) retenu sur le couvercle du compartiment de capote, cette liaison étant effectuée par une articulation (18).
